# EUROPÄISCHE PATENTANMELDUNG

(11) **EP 3 929 055 A1**
(43) Veröffentlichungstag der Anmeldung: **29.12.2021**
(21) Anmeldenummer: 20181339.1
(22) Anmeldetag: 22.06.2020
(51) Int. Cl.: B61D 17/04, B61D 17/20, B61G 11/16, B61D 19/02

(54) **SCHIENENFAHRZEUGWAGEN ZUM TRANSPORT VON PASSAGIEREN, SCHIENENFAHRZEUG MIT EINEM SCHIENENFAHRZEUGWAGEN UND VERFAHREN ZUR BILDUNG EINES ÜBERGANGS ZWISCHEN SCHIENENFAHRZEUGWAGEN**

(71) Anmelder: Stadler Rail AG, 9565 Bussnang (CH)
(72) Erfinder: Font, Joachim, 9425 Thal (CH); Khairallah, Fadi, 9015 St. Gallen (CH)
(74) Vertreter: Hepp Wenger Ryffel AG

(57) **Zusammenfassung**

Die Erfindung betrifft einen Schienenfahrzeugwagen zum Transport von Passagieren umfassend einen Wagenkasten, einem Wagenkastenboden, einer Wagenkastendecke und einem stirnseitigen Frontbereich. Im Frontbereich ist eine A-Säule angeordnet. Der Wagenkasten weist eine Längsausdehnung und eine Querausdehnung auf und die Längsausdehnung ist grösser als die Querausdehnung. Der Wagenkasten umfasst eine Höhenausdehnung quer zur Längs- und Querausdehnung. Die A-Säule ist in Querrichtung im Wesentlichen in der Mitte angeordnet, so dass der Frontbereich in eine erste und eine zweite Seite geteilt ist, wobei die erste Seite 30-70% der Querausdehnung umfasst.

## Beschreibung

Die Erfindung betrifft einen Schienenfahrzeugwagen zum Transport von Passagieren, ein Schienenfahrzeug mit einem Schienenfahrzeugwagen und ein Verfahren zur Bildung eines Übergangs zwischen Schienenfahrzeugwagen.

Um die Sicherheit der Passagiere in einem Personenwagen im Falle eines Zusammenstosses garantieren zu können, müssen Schienenfahrzeugwagen gewisse Anforderungen an die strukturelle Sicherheit und an Evakuierungsmöglichkeiten erfüllen. Solche Sicherheitsvorschriften sind beispielsweise in der EN 15227 aufgeführt.

Dabei ist der Frontbereich eines Schienenfahrzeuges, also beispielsweise der Bereich eines Schienenfahrzeugwagens mit der Führerkabine, besonderen Voraussetzungen unterworfen: Bei einem frontalen Zusammenstoss ist dieser Frontbereich die Aufprallstelle und unterliegt dementsprechend erhöhten Sicherheitsanforderungen. Gleichzeitig ist es möglich, dass durch das Verkuppeln mehrerer Züge mit zwei Wagen mit Führerkabine ohne Fronttüre ein Evakuierungsweg von einer ersten Führerkabine in eine zweite Führerkabine behindert wird.

Aus dem Stand der Technik sind Schienenfahrzeuge mit Türen an einem Schienenfahrzeugwagenende in der Mitte des Schienenfahrzeugwagens bekannt, zum Beispiel bei den Class 377, 387, 450 oder 458 aus Grossbritannien, den 285 Series, E351 Series und E353 Series aus Japan oder dem ICMm aus den Niederlanden. Diese Schienenfahrzeuge haben den Nachteil, dass die Sicht des Lokführers eingeschränkt wird und somit der Führerstand beeinträchtigt wird.

Ebenso sind Schienenfahrzeugwagen mit asymmetrischem Notausstieg bekannt zu Beispiel aus EP2451692, bei dem die Passagiere über eine Rampe den Wagen verlassen können, oder JP2012171402, bei dem die Passagiere das Fahrzeug über eine Leiter verlassen können. Diese Anordnungen haben den Nachteil, dass keine Evakuierung in einen anschliessenden Schienenfahrzeugwagen möglich ist.

Diese Systeme sind zudem sehr komplex und schwer.

Weiter ist aus WO 11/ 142 208 ein Schienenfahrzeugwagen mit vier symmetrisch zur Mittellängsachse des Wagens angeordneten A-Säulen bekannt.

Aus US 2014/ 360 402 ist ein Schienenfahrzeugwagen mit einer Frontkonstruktion aus mehreren Verstrebungen, welche mit einem horizontal angeordneten Querbalken verbunden sind, bekannt.

Diese Konstruktionen sind sehr aufwändig gestaltet und weisen keine Evakuierungsmöglichkeit in einen weiteren Frontwagen auf.

Es ist daher Aufgabe der Erfindung, die Nachteile des Standes der Technik zu beheben und insbesondere ein Schienenfahrzeugwagen, ein Schienenfahrzeug und ein Verfahren zur Bildung eines Übergangs zwischen Schienenfahrzeugwagen bereitzustellen, welche eine hohe Crashsicherheit aufweisen und eine einfache Evakuierung in einen angrenzenden Schienenfahrzeugwagen und eine geräumige Führerkabine mit breitem Fahrerpult ermöglichen ohne die Sicht des Lokführers einzuschränken.

Die Aufgabe wird gelöst durch einen Schienenfahrzeugwagen zum Transport von Passagieren. Der Schienenfahrzeugwagen umfasst einen Wagenkasten, einen Wagenkastenboden, eine Wagenkastendecke und einen stirnseitigen Frontbereich. Im Frontbereich ist eine A-Säule angeordnet. Der Wagenkasten weist eine Längsausdehnung und eine Querausdehnung auf und die Längsausdehnung ist grösser als die Querausdehnung. Der Wagenkasten umfasst eine Höhenausdehnung quer zur Längs- und Querausdehnung. Die A-Säule ist in Querrichtung im Wesentlichen in der Mitte angeordnet, so dass der Frontbereich in eine erste und eine zweite Seite geteilt ist, wobei die erste Seite 30-70% der Querausdehnung umfasst.

Der Schienenfahrzeugwagen ist einfach aufgebaut und ist in sehr unterschiedlichen Kabinentypen einsetzbar. Weiter hat die Erfindung den Vorteil, dass die Sicherheitselemente keinen aerodynamischen Einfluss haben und die Komponenten vor äusseren Einflüssen geschützt sind. Zudem hat die Erfindung den Vorteil, dass es wenig Lärm und Vibrationen in der Kabine gibt.

Eine solchermassen angeordnete A-Säule erlaubt es, im Fall eines Aufpralls auch in Querrichtung im Wesentlichen in der Mitte Kräfte aufzunehmen. Dadurch sind Personen im Frontbereich besser geschützt.

Unter einer A-Säule ist hier das Äquivalent zu einer A-Säule im Kraftfahrzeugbau gemeint. Im Kraftfahrzeugbau wird unter einer A-Säule die Verbindung zwischen Fahrzeugdach und der vorderen Spritzwand verstanden. Analog wir unter eine A-Säule im Rahmen dieser Erfindung eine Säule im stirnseitigen Frontbereich eines Schienenfahrzeugwagens verstanden, die sich vom Wagenkastenboden bis zur Wagenkastendecke erstreckt und strukturelle Kräfte aufnimmt.

Im Wesentlichen in der Mitte bedeutet in diesem Zusammenhang, dass die A-Säule nicht in der Nähe der Seitenwand, sondern insbesondere in einem Bereich von 30-70% der Querausdehnung des Wagenkastens angeordnet ist.

Die im Wesentlichen in der Mitte angeordnete A-Säule kann in Längsrichtung ein Ende eines Wagenkastens bilden.

Dadurch bildet die A-Säule bei einem Aufprall den ersten Aufprallpunkt und sorgt einfach dafür, dass ein Überlebensraum für den Fahrer garantiert wird.

Der Schienenfahrzeugwagen, insbesondere der Frontbereich, kann mindestens ein, bevorzugt mindestens drei, Energieverzehrelemente zum Absorbieren einer Crashenergie umfassen.

Unter Energieverzehrelementen werden hier Elemente verstanden, welche dazu ausgelegt sind, durch Deformation von Werkstoffen innerhalb der Energieverzehrelemente eine durch einen Aufprall eingebrachte Bewegungsenergie abzubauen. Insbesondere haben die Energieverzehrelemente keine weitere Funktion für die Statik des Wagenkastens.

Solche Energieverzehrelemente führen zu einer erhöhten Sicherheit der Passagiere im Schienenfahrzeugwagen.

Das oder die Energieverzehrelemente kann/können zumindest teilweise aus Aluminium oder Aluminiumlegierungen, bevorzugt aus EN AW-5754 H111, sein. Das oder die Energieverzehrelemente kann/können zumindest teilweise durch Schweissen hergestellt sein.

Solche Energieverzehrelemente sind leicht und leicht verformbar.

Das mindestens eine Energieverzehrelement kann an der A-Säule, bevorzugt in einem Bereich unterhalb der Mitte in Höhenrichtung der A-Säule, angeordnet sein.

Dadurch kann auf zusätzliche tragende Strukturen für die Energieverzehrelemente verzichtet werden, wodurch der Aufbau des Wagenkastens vereinfacht wird.

Mindestens eines der Energieverzehrelemente kann auf jeder Seite des Frontbereichs angeordnet sein, wobei diese Energieverzehrelemente insbesondere in der Höhenrichtung niedriger angeordnet sein können als das Energieverzehrelement, welches an der A-Säule angeordnet ist.

Dadurch wird die Aufprallenergie über den Frontbereich verteilt aufgenommen.

Die Energieverzehrelemente, insbesondere die seitlich angeordneten Energieverzehrelemente, können zweiteilig ausgebildet sein. Ein erstes Teilelement kann ein Crashmodul und ein zweites Teilelement eine Crashbox umfassen.

Das Crashmodul kann eine Aluminiumlegierung, insbesondere EN AW-5754 H111 umfassen. Das Crashmodul kann insbesondere dazu ausgelegt sein, 800KJ zu absorbieren. Die Crashbox kann ebenfalls eine Aluminiumlegierung, insbesondere EN AW-5754 H111 umfassen.
Die Crashbox kann dazu ausgelegt sein, 300KJ aufzunehmen.

Durch diese Energieverzehrelemente werden die Passagiere und der gesamte Aufbau einer geringeren Verzögerungskraft ausgesetzt und unerwünschte Deformationen am Wagenkasten werden verhindert. Das Crashmodul und die Crashbox können gebogene und geschweisste Aluminiumbleche umfassen. Das ermöglicht eine einfach und billige Herstellung dieser Elemente. Das Crashmodul kann dazu ausgelegt sein, bei Zusammenstössen mit geringerer Aufprallenergie zerstört zu werden, als die Crashbox. Insbesondere kann das Crashmodul die Form eines Pyramidenstumpfs umfassen, wobei bevorzugt die breite Unterseite an der Crashbox und die schmalere Oberseite in Fahrtrichtung am Ende des Wagenkastens angeordnet sein kann. Die Crashbox kann in die Struktur des Wagenkastens integriert, insbesondere mit den Seitensäulen verschweisst, sein. Die Crashmodule können mit der Crashbox verschraubt sein.

Das sorgt für eine sichere Energieübertragung. Die angeschraubten Crashmodule können nach einem leichten Zusammenstoss einfach ausgetauscht werden.

Das erste Teilelement kann einen Anticlimber umfassen.

Der Wagenkasten kann zwei in Querrichtung seitlich angeordnete Säulen umfassen, welche insbesondere in Fahrtrichtung hinter der A-Säule angeordnet ein können.

Dadurch wird eine verbesserte Verteilung der Aufprallenergie ermöglicht.

Die A-Säule kann über den Wagenkastenboden und die Wagenkastendecke mit der Wagenkastenstruktur verbunden, insbesondere verschraubt, sein.

Die A-Säule kann aus Stahl sein. Die A-Säule kann, insbesondere an einem in Höhenrichtung unteren Bereich, Verstrebungen zur Verstärkung gegen einen Aufprall in Fahrtrichtung umfassen. Die A-Säule kann ein, insbesondere rechteckiges, Hohlprofil umfassen. Das Hohlprofil kann mit einem ersten Ende mit der Wagenkastendecke und mit einem zweiten Ende mit der Wagenkastenboden verbunden sein. Im Hohlraum des Hohlprofils können weitere Verstrebungen angeordnet sein. Dadurch kann die A-Säule höheren Kräften widerstehen.

Die Aufgabe wird weiterhin gelöst durch ein Schienenfahrzeugwagen, insbesondere Schienenfahrzeugwagen wie vorhergehend beschrieben. Der Schienenfahrzeugwagen umfasst einen Wagenkasten mit einem stirnseitigen Frontbereich. Der Wagenkasten weist eine Längsausdehnung und eine Querausdehnung auf. Die Längsausdehnung ist grösser als die Querausdehnung. Der Wagenkasten umfasst eine Höhenausdehnung quer zur Längs- und Querausdehnung. Der Schienenfahrzeugwagen umfasst mindestens eine Tür mit mindestens einem Türflügel. Die Tür ist im Frontbereich stirnseitig angeordnet, wobei der Türflügel in einem geschlossenen Zustand den Durchgang durch die Tür verhindert. Die mindestens eine Tür ist in einer Querrichtung in Bezug auf eine Fahrzeugmitte seitlich angeordnet, so dass bei geöffnetem Zustand des Türflügels der Wagenkasten durch die Wagenkastenfront betreten oder verlassen werden kann. Der mindestens eine Türflügel ist insbesondere im geöffneten Zustand in einer Querrichtung im Wesentlichen in Fahrzeugmitte angeordnet.

Das ermöglicht einen Evakuierungsweg im Crashfall und trotzdem ein ausreichendes Sichtfeld für den Fahrzeugführer.

Der Schienenfahrzeugwagen kann im Frontbereich nur eine Tür umfassen, wobei auf der im Frontbereich türlosen Seite des Wagenkastens ein Bedienpult für einen Fahrzeugführer angeordnet sein kann.

Das erlaubt ein geräumiges Bedienpult.

Der Wagenkasten kann Wagenkastenseitenwände umfassen, wobei die Wagenkastenseitenwände jeweils eine Wagenkasteninnenseite und eine Wagenkastenaussenseite umfassen. Der Türflügel kann von der Wagenkasteninnenseite und/oder von der Wagenkastenaussenseite und/oder von der Innenseite des Frontbereiches öffenbar sein, insbesondere manuell und/oder mit Schalter.

"Manuell" bedeutet im Rahmen dieses Dokuments, dass die Öffnungsbewegung manuell ausgeführt und mechanisch übertragen wird. "mit Schalter", bedeutet, dass die Öffnung über einen Schalter ausgelöst und als elektrisches oder elektronisches Signal an einen Öffnungsmechanismus übertragen wird.

Der Türflügel kann eine Türflügelquerausdehnung aufweisen, die sich im Wesentlichen über ¼ bis ½, bevorzugt im Wesentlichen 1/3, der Querausdehnung des Frontbereiches erstreckt.

Das erlaubt einen einfachen Durchgang bei einer Evakuierung bei genügendem Sichtfeld für einen Fahrzeugführer.

Der Frontbereich oder der Türflügel kann zumindest teilweise aus Glas, Acrylglas oder anderen durchsichtigen Materialien sein, insbesondere in einem in Höhenrichtung oberen Bereich. Das Glas, Acrylglas oder das durchsichtige Material kann eine Beschichtung wie beispielsweise eine Schutzfolie zum Schutz des Fahrzeugführers vor UV-Licht, Laserstrahlen, Beschlagen durch Kondensat oder Vereisung umfassen. Der Frontbereich kann Scheibenwischer und/oder Heizungselemente zum Erwärmen des durchsichtigen Materials umfassen. Der Frontbereich kann eine Klimaanlage umfassen. Der Frontbereich kann Prallkissen wie Airbags oder sonstige ergänzende Rückhaltesysteme für den Schutz des Fahrzeugführers umfassen. Der Frontbereich kann verbaute Crashsensoren und/oder Deformationssensoren umfassen. Die Sensoren können mit einem Crashmeldesystem verbunden sein. Der Frontbereich kann Metalle und/oder Kunstoffe und/oder Kohlefasern umfassen.

Der Türflügel kann schwenkbar und/oder verschiebbar angeordnet sein.

Der Schienenfahrzeugwagen kann im Frontbereich einen Schiebetritt zum Übergang zu einem anschliessenden Schienenfahrzeugwagen oder einem weiteren Tritt umfassen.

Das ermöglicht eine einfache Evakuierung von einem ersten Schienenfahrzeugwagen zu einem zweiten Schienenfahrzeugwagen. Der Schiebetritt kann entlang der Fahrtrichtung ein-und ausfahrbar sein und/oder ausklappbar und/oder schwenkbar gelagert sein. Der Schiebetritt kann einen Sensor zur Messung einer möglichen Ausfahrtiefe und insbesondere eine Steuerung oder Regelung zur Regulierung des Ausfahrens des Schiebetritts umfassen.

Das ermöglicht eine einfache Anpassung der Ausfahrtiefe beispielsweise bei einer Auslenkung der Kupplung in einer Kurve, wodurch Spalten vermieden werden können und daher der Fahrzeugwagen sicher und einfach durch die Fronttüre betreten und verlassen werden kann.

Der Wagenkastenboden kann so angeordnet sein, dass der Wagenkastenboden eine Wagenbodeninnenhöhe umfasst, wobei der Schiebetritt im Wesentlichen auf Wagenbodeninnenhöhe fluchtend am Wagenkastenboden angeordnet ist. Der Schiebetritt kann Antirutschelemente umfassen.

Der Schienenfahrzeugwagen kann mindestens ein Geländer zur Sicherung des Betretens des Schiebe- und/oder Übergangstritts umfassen.

So wird ein Übergang zwischen Schienenfahrzeugwagen sicherer. Das Geländer kann Markierungselemente zur besseren Sichtbarkeit des Geländers oder der Fluchtrichtung umfassen, wie Lichtreflexstreifen oder Signalleuchten. Das Geländer kann in einer eingefahrenen Position innerhalb des Wagenkastens angeordnet sein. Das Geländer kann in einer ausgefahrenen Position so angeordnet sein, dass ein Teil des Geländers im Inneren des Wagenkastens angeordnet ist und ein letzter Teil ausserhalb des Wagenkastens angeordnet sind.

Dadurch werden Stolperfallen wie Höhenunterschiede oder rutschige Oberflächen vermieden und das Verlassen des Fahrzeugwagens wird sicherer.

Der Schiebetritt kann im Wesentlichen so breit sein, wie die Tür und insbesondere bis zu 600 mm ausfahrbar sein. Das Geländer kann mit Schalter und/oder manuell betätigbar sein. Das Geländer kann einen Distanzsensor, insbesondere einen Ultraschallsensor, zur Bestimmung einer möglichen Ausfahrweite umfassen.

Dadurch kann sichergestellt werden, dass das Geländer die nötige Distanz zum nächsten Schienenfahrzeugwagen überbrückt.

So werden eine Verengung des Fluchtwegs und damit eine mögliche Stauzone verhindert. Der Schiebetritt ist so einfach an eine Distanz zu einem anschliessenden Schienenfahrzeugwagen anpassungsfähig ausfahrbar. Es entstehen keine gefährlichen Lücken.

Der Schienenfahrzeugwagen kann im Frontbereich zumindest einen ersten Teil einer Kupplung umfassen.

Damit kann der Schienenfahrzeugfrontwagen einfach mit anderen Wagen verbunden werden.

Das Schienenfahrzeug kann mindestens einen fixierten Übergangstritt umfassen, welcher bevorzugt über dem zumindest ersten Teil der Kupplung angeordnet ist.

So kann ein Übergang über die Kupplung einfach ermöglicht werden.

Der Übergangstritt kann eine Trittfläche mit einer Trittflächenlänge, die in Längsausdehnungsrichtung des Wagenkastens ausgebildet ist, und einer Trittflächenbreite, die quer zu Längsausdehnungsrichtung des Wagenkastens ausgebildet ist, umfassen. Die Form der Trittfläche kann so gewählt sein, dass ein Auslenken der Kupplung und/oder ein Ausfahren des Schiebetritts nicht behindert wird, insbesondere kann die Trittflächenlänge und/oder die Trittflächenbreite zumindest einseitig in einem äusseren Trittflächenbereich geringer als im mittleren Bereich der Trittfläche oder auf der anderen Seite der Trittfläche sein. Bevorzugt kann die Form der Trittfläche zum Freihalten von Bewegungsfreihalteflächen, welche für die Bewegung beim Auslenken oder Bewegen des Wagenkasten und/oder anderer Elementen des Schienenfahrzeugwagens freizuhalten sind, abgerundet und/oder abgeschrägt sein. Insbesondere kann die Form der Trittfläche vieleckig mit einer langen Seite und mehreren kleineren Seiten sein, bevorzugt kann die Trittfläche im Wesentlichen die Form eines halbierten Dekagons mit einer langen Seite entlang einer Halbierungslinie und fünf kürzeren Seiten umfassen. Insbesondere umfasst die Übergangstrittfläche eine Trittflächenlänge von 285 mm.

Damit wird sowohl ein einfacher und sicherer Übergang über die Kupplung ermöglicht, ohne dass der Übergangstritt oder der Wagen beim Auslenken Schaden nimmt. Der Übergangstritt kann weitere Einbuchtungen oder Ausnehmungen umfassen. Der Übergangstritt kann einen Gitterrost umfassen. Der Übergangstritt kann eine Anti-Rutsch-Oberfläche umfassen.

Das Geländer kann einen Handlauf umfassen, wobei der Handlauf teleskopisch verlängerbar ist.

Das ermöglicht eine einfache Anpassung der Ausfahrtiefe des Handlaufs. Der Handlauf kann Befestigungsmittel wie Haken oder Stifte zur lösbaren Verbindung mit einem Frontbereich eines weiteren Schienenfahrzeugwagens umfassen. Der Frontbereich des Schienenfahrzeugwagens kann Befestigungselemente zur Verbindung mit Befestigungsmitteln eines Handlaufs eines anschliessenden Schienenfahrzeugwagens umfassen.

Das Geländer kann mindestens einen Geländerpfosten umfassen, welcher klappbar am Handlauf angeordnet ist. Das Geländer kann einen Untergurt umfassen, wobei der Untergurt klappbar am Handlauf und/oder am Wagenkasten angeordnet ist.

So ist das Geländer stabiler. Der Untergurt kann teleskopisch verlängerbar sein. Der Untergurt kann lösbare Befestigungselemente wie schwenkbare Haken oder ausfahrbare Stifte zum Befestigen des Untergurts an einem Tritt, einem weiteren Untergurts eines weiteren Schienenfahrzeugwagens oder am Fronbereich eines weiteren Schienenfahrzeugwagens umfassen. Der Untergurt kann an einem Tritt befestigt sein oder zumindest teilweise in den Tritt integriert sein.

Der Frontbereich kann eine Abdeckung umfassen, wobei die Abdeckung insbesondere Glasfaser-verstärkten Kunststoff umfasst.

Dadurch wird die Aerodynamik auf eine einfache Weise verbessert und die tragenden Elemente wie die A-Säule oder die Crashelemente vor äusseren Einflüssen von Regen oder Sonneneinstrahlung geschützt.

Der Schienenfahrzeugwagen kann eine Leiter zur Zug-zu-Gleis-Evakuierung umfassen.

Somit ist auch eine Evakuierung möglich, wenn der Schienenfahrzeugwagen der erste oder letzte Wagen des Zuges ist.

Die Leiter kann in einem verstauten Zustand senkrecht im Wagenkasteninnern angeordnet sein. Bevorzugt kann der Wagenkastenboden Befestigungselemente zum Anbringen der Leiter umfassen, insbesondere kann die Leiter in einem gebrauchten Zustand so an den Befestigungselementen angeordnet sein, dass ein Leiterende in Höhenrichtung auf Wagenbodeninnenhöhe angeordnet ist und ein zweites Leiterende tiefer als die Wagenbodeninnenhöhe angeordnet ist.

Die Leiter kann so einfach verstaut werden.

Die Aufgabe wird weiter gelöst durch ein Schienenfahrzeug mit mindestens einem Schienenfahrzeugwagen wie vorhergehend beschrieben.

Die Aufgabe wird zudem gelöst durch ein Verfahren zur Bildung eines Übergangs zwischen Schienenfahrzeugwagen, umfassend die Schritte:
- Bereitstellen eines ersten und eines zweiten Schienenfahrzeugwagens mit jeweils einem Schiebetritt und jeweils einem Türflügel, insbesondere von zwei Schienenfahrzeugwagen wie vorhergehend beschrieben,
- Insbesondere Erteilen eines Befehls zur Bildung eines Übergangs, insbesondere durch Drücken eines ersten Schalters, bevorzugt eines Schalters im ersten Schienenfahrzeugwagen,
- Ausfahren der jeweiligen Schiebetritte des ersten und des zweiten Schienenfahrzeugwagens,
- Öffnen der jeweiligen Türflügel des ersten und des zweiten Schienenfahrzeugwagens,
- Insbesondere Evakuieren der Personen aus dem ersten Schienenfahrzeugwagen über die Schiebetritte in den zweiten Schienenfahrzeugwagen.

Dieses Verfahren ermöglicht eine einfache Evakuierung von Passagieren aus dem ersten Wagen in den zweiten Wagen.

Das Verfahren kann die folgenden Schritte umfassen:
- Insbesondere Erteilen eines Schliessbefehls, insbesondere durch Drücken eines zweiten Schalters, bevorzugt eines Schalters im zweiten Schienenfahrzeugwagen,
- Schliessen der Türflügel,
- Einfahren der Schiebetritte.

So kann einfach verhindert werden, dass Passagiere nach der Evakuierung in die Gefahrzone zurückkehren.

Das Verfahren kann den folgenden Schritt umfassen:
- Einschalten der Fahrzeugscheinwerfer zur Beleuchtung.

Das ermöglicht einen sichereren Übergang über die Tritte.

Das Verfahren kann weiter den folgenden Schritt umfassen:
- Ausfahren und/oder Ausklappen eines Geländers.

So kann verhindert werden, dass Passagiere beim Evakuieren vom Übergang fallen oder hinabgestossen werden.

Die Erfindung wird anhand der folgenden Figuren weiter erläutert. Die Figuren zeigen
- Fig. 1: Eine perspektivische Ansicht eines Frontbereichs einer Wagenkastenstruktur
- Fig. 2: Eine perspektivische Ansicht eines Frontbereichs eines Schienenfahrzeugwagens
- Fig. 3: Eine perspektivische Ansicht eines Kupplungsteils mit einem Übergangstritt
- Fig. 4: Eine perspektivische Ansicht eines Übergangs zwischen zwei Schienenfahrzeugwagen

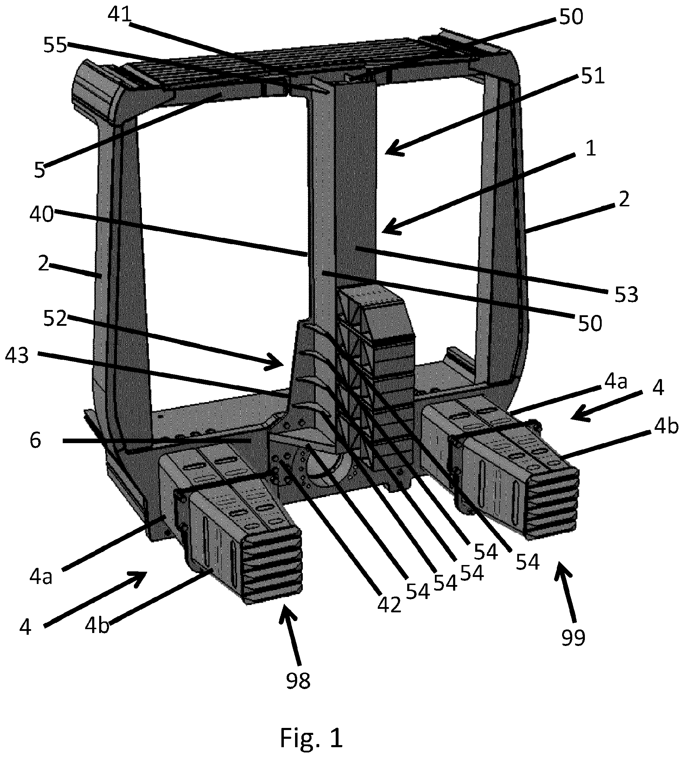

Die Figur 1 zeigt eine perspektivische Ansicht eines Frontbereichs 100 einer Wagenkastenstruktur. Zu sehen ist eine Wagenkastenstruktur mit einer Wagenkastendecke 5 und einem Wagenkastenboden 6. Die Wagenkastendecke 5 und der Wagenkastenboden 6 sind über eine A-Säule 1 miteinander verbunden. Die A-Säule 1 ist in einer Querausdehnung der Wagenkastenstruktur im Wesentlichen mittig angeordnet, so dass der Frontbereich 100 in zwei Seiten 98 und 99 geteilt ist. Die Seiten 98 und 99 umfassen jeweils eine Seitensäule 2.

Die A-Säule 1 ist in Fahrtrichtung an einem Ende der Wagenkastenstruktur angeordnet.

Weiter zeigt die Figur 1 zwei Seitenenergieverzehrelemente 4 und ein Mittenenergieverzehrelement 3. Das Mittenenergieverzehrelement 3 ist an einem unteren Bereich der A-Säule angeordnet.

Jeweils ein Seitenenergieverzehrelement 4 ist an jeder Seitensäule 2 angeordnet. Die Seitenenergieverzehrelemente 4 sind in einer Höhenrichtung der Wagenkastenstruktur niedriger angeordnet, als das Mittenenergieverzehrelement 3. Die Seitenenergieverzehrelemente 4 umfassen jeweils zwei Teilelemente: eine Crashbox 4a und ein Crashmodul 4b. Diese beiden Teilelemente umfassen gebogene und verschweisste Aluminiumbleche. Sie sind ausgelegt darauf, durch Aufnahme von Kräften die Passagiere zu schützen. Die Crashbox 4a ist im Wesentlichen quaderförmig und ist mit der jeweiligen Seitensäule 2 verschweisst. Das Crashmodul 4b umfasst im Wesentlichen die Form eines Pyramidenstumpfs und ist über eine Anschlussplatte mit der Crashbox 4a verschraubt.

Die A-Säule 1 umfasst eine Frontplatte 53, eine Rückplatte 40 und zwei Seitenplatten 50a und 50b. Diese Platten sind zu einem rechteckigen Hohlprofil verschweisst. Die Rückplatte 40 ist mit einem ersten Ende in einem oberen Bereich 51 der A-Säule 1 mit der Frontseite der Wagenkastendecke 5 und mit einem zweiten Ende in einem unteren Bereich 52 der A-Säule 1 mit der Frontseite des Wagenkastenbodens 6 verschraubt. Das erste Ende der Rückenplatte 40 umfasst eine Verbreiterung 41 in Querrichtung. Die Verbreiterung 41 ist über jeweils ein Versteifungselement 55 mit einer Seitenplatte 50a und 50b verbunden (hier nur ein Versteifungselement 55 zu sehen). Das zweite Ende der Rückenplatte 40 umfasst zwei Flügelelemente 42 (hier nur ein Flügelelement 42 zu sehen). Der untere Bereich 52 der A-Säule 1 umfasst eine Erweiterung 43 der Rückenplatte 40 in Querrichtung, welche in Richtung der Flügelelemente 42 zunimmt. Die Seitenplatten 50a und 50b sind über jeweils fünf unterschiedlich grosse Verstrebungselemente 54 mit der Erweiterung 43 verbunden (hier nur eine Seitenplattenverbindung zu sehen).

Bei einem frontalen Zusammenprall verformen sich die Energieverzehrelemente 3 und 4 und bauen dadurch Bewegungsenergie ab. Im Fall eines leichten Zusammenstosses verformt sich nur die Crashmodule 4b und können danach einfach ausgetauscht werden. Die A-Säule 1 hingegen ist so stabil ausgelegt, dass auch bei einem schweren Crash ein Überlebensraum für den Fahrzeugführer und die Passagiere garantiert werden kann. Die A-Säule 1 erfüllt die Anforderungen definiert in Szenario 3 von EN15227.

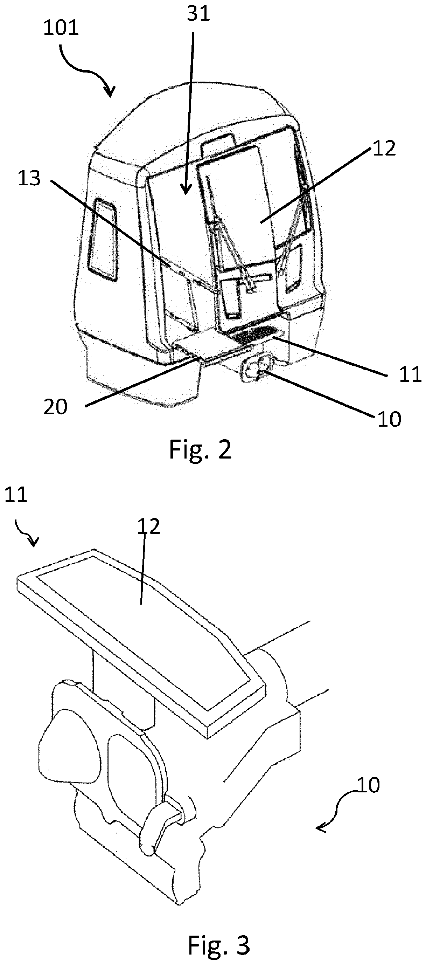

Figur 2 zeigt einen Frontbereich eines Schienenfahrzeugwagens 101. Zu sehen ist eine Türöffnung 31 in der Front. Die Türöffnung 31 ist in Querrichtung dezentral angeordnet. Zu sehen ist weiter ein Türflügel 12 in einem geöffneten Zustand, in dem der Schienenfahrzeugwagen 101 durch die Türöffnung 31 in der Front verlassen werden kann. Der Türflügel 12 ist im geöffneten Zustand in Querrichtung im Wesentlichen mittig angeordnet.

Unterhalb der Türöffnung 31 ist ein Schiebetritt 20 angeordnet. Hier ist der Schiebetritt 20 in einem ausgefahrenen Zustand gezeigt. Der Schiebetritt 20 wird in oder parallel zur Fahrtrichtung ein und ausgefahren.

Zu sehen ist weiter ein Geländer 13, welches durch die Türöffnung 30 ausgefahren worden ist.

Weiter zeigt die Figur einen Teil einer Kupplung 10. Oberhalb des Kupplungsteils 10 ist ein fixer Übergangstritt 11 angeordnet.

Figur 3 zeigt eine isometrische Ansicht des Kupplungsteils 10 mit dem fixen Übergangstritt 11 aus Figur 2.

Der Übergangstritt 12 umfasst eine Trittfläche 12. Die Form der Trittfläche 12 ist vieleckig mit einer langen Seite und mehreren kleineren Seiten, bevorzugt umfasst die Trittfläche im Wesentlichen die Form eines halbierten Dekagons mit einer langen Seite entlang einer Halbierungslinie und fünf kürzeren Seiten, wobei zwei Seiten in einem spitzen Winkel an die lange Seite angrenzen. Die Form der Trittfläche wurde so gewählt, dass ein Auslenken der Kupplung und/oder ein Ausfahren des Schiebetritts nicht behindert wird.

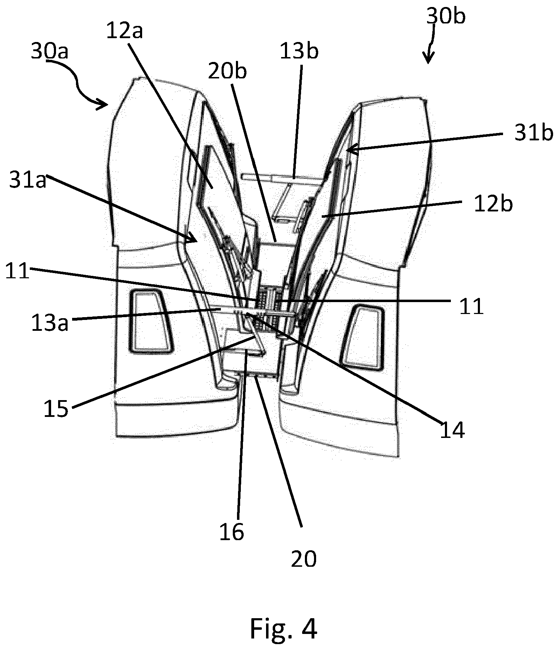

Figur 4 zeigt zwei Schienenfahrzeugwagen 30a und 30b in perspektivischer Ansicht. Die Schienenfahrzeugwagen 30a und 30b sind mittels eines Übergangs verbunden, so dass Passagiere von einem Schienenfahrzeugwagen in den anderen wechseln können, beispielsweise im Fall einer Evakuierung eines der Schienenfahrzeugwagen.

Zu sehen sind zwei Geländer 13a und 13b. Jedes Geländer 13 umfasst einen teleskopierbaren Handlauf 14, ein ausklappbarer Pfosten 15 und einen ausfahrbaren Untergurt 16 (in der Figur nur beim Geländer 13a nummeriert).
Um einen Übergang zu bilden, wird als erstes über einen Schalter ein Ausfahrbefehl erteilt. Die Schiebetritte 20a und 20b werden ausgefahren. Dann werden die Türflügel 12a und 12b geöffnet. Die Geländer 12a und 13b werden ausgefahren und aufgeklappt. Danach können die Passagiere den zu evakuierenden Schienenfahrzeugwagen, beispielsweise Schienenfahrzeugwagen 30a, verlassen. Dazu betreten sie als erstes den Schiebetritt 20a des Schienenfahrzeugwagens 30a. Danach betreten sie die fixen Übergangstritte 11a und 11b, um zum Schiebetritt 20b des Schienenfahrzeugwagens 30b zu gelangen. Von dort können sie durch die Türöffnung in den Schienenfahrzeugwagen 30b gelangen.

Die Geländer 13a und 13b können wieder eingeklappt und eingefahren werden und die Türflügel 12a und 12b können geschlossen, die Schiebetritte 20a und 20b eingefahren werden.

Durch eine solche Evakuierungsanordnung ist sowohl ein breites Sichtfeld und Fahrerpult für den Fahrzeugführer möglich, wie auch eine Evakuierung von einem solchen Endwagen in einen anschliessenden Endwagen.

## Patentansprüche

1. Schienenfahrzeugwagen zum Transport von Passagieren umfassend einen Wagenkasten, einem Wagenkastenboden, einer Wagenkastendecke und einem stirnseitigen Frontbereich, wobei im Frontbereich eine A-Säule angeordnet ist, wobei der Wagenkasten eine Längsausdehnung und eine Querausdehnung aufweist und die Längsausdehnung grösser ist als die Querausdehnung, wobei der Wagenkasten eine Höhenausdehnung quer zur Längs- und Querausdehnung umfasst, **dadurch gekennzeichnet, dass** die A-Säule in Querrichtung im Wesentlichen in der Mitte angeordnet ist, so dass der Frontbereich in eine erste und eine zweite Seite geteilt ist, wobei die erste Seite 30-70% der Querausdehnung umfasst.

2. Schienenfahrzeugwagen nach einem der vorhergehenden Ansprüche, **dadurch gekennzeichnet, dass** der Schienenfahrzeugwagen, insbesondere der Frontbereich, mindestens ein, bevorzugt mindestens drei, Energieverzehrelemente zum Absorbieren einer Crashenergie umfasst, wobei das oder die Energieverzehrelemente insbesondere zumindest teilweise aus Aluminium oder Aluminiumlegieren sind.

3. Schienenfahrzeugwagen nach Anspruch 2, **dadurch gekennzeichnet, dass** das mindestens ein Energieverzehrelement an der A-Säule, bevorzugt in einem Bereich unterhalb der Mitte der A-Säule, angeordnet ist.

4. Schienenfahrzeugwagen nach Anspruch 2 oder 3, **dadurch gekennzeichnet, dass** mindestens eines der Energieverzehrelemente auf jeder Seite des Frontbereichs angeordnet ist, wobei diese Energieverzehrelemente insbesondere in der Höhenrichtung niedriger angeordnet sind als das Energieverzehrelement, welches an der A-Säule angeordnet ist.

5. Schienenfahrzeugwagen nach einem der Ansprüche 3 bis 4, **dadurch gekennzeichnet, dass** die Energieverzehrelemente, insbesondere die seitlich angeordneten Energieverzehrelemente, zweiteilig ausgebildet sind, wobei ein erstes Teilelement ein Crashmodul und ein zweites Teilelement eine Crashbox umfasst.

6. Schienenfahrzeugwagen nach einem der vorhergehenden Ansprüche, **dadurch gekennzeichnet, dass** der Wagenkasten zwei in Querrichtung seitlich angeordnete Säulen umfasst, welche insbesondere in Fahrtrichtung hinter der A-Säule angeordnet sind.

7. Schienenfahrzeugwagen nach einem der vorhergehenden Ansprüche, **dadurch gekennzeichnet, dass** die A-Säule über den Wagenkastenboden und die Wagenkastendecke mit der Wagenkastenstruktur verbunden, insbesondere verschraubt, ist.

8. Schienenfahrzeugwagen nach einem der vorhergehenden Ansprüche, wobei der Schienenfahrzeugwagen mindestens eine Tür mit mindestens einem Türflügel umfasst, wobei die Tür im Frontbereich angeordnet ist, wobei der Türflügel in einem geschlossenen Zustand den Durchgang durch die Tür verhindert, **dadurch gekennzeichnet, dass** die mindestens eine Tür in einer Querrichtung in Bezug auf eine Fahrzeugmitte seitlich angeordnet ist, so dass bei geöffnetem Zustand des Türflügels der Wagenkasten durch die Wagenkastenfront betreten oder verlassen werden kann, wobei der mindestens eine Türflügel insbesondere im geöffneten Zustand in einer Querrichtung im Wesentlichen in Fahrzeugmitte angeordnet ist.

9. Schienenfahrzeugwagen nach Anspruch 8, **dadurch gekennzeichnet, dass** der Schienenfahrzeugwagen im Frontbereich nur eine Tür umfasst, wobei auf der im Frontbereich türlosen Seite des Wagenkastens ein Bedienpult für einen Fahrzeugführer angeordnet ist.

10. Schienenfahrzeugwagen nach einem der vorhergehenden Ansprüche, **dadurch gekennzeichnet, dass** der Schienenfahrzeugwagen im Frontbereich einen Schiebetritt zum Übergang zu einem anschliessenden Schienenfahrzeugwagen oder einem weiteren Tritt umfasst.

11. Schienenfahrzeugwagen nach Anspruch 10, **dadurch gekennzeichnet, dass** der Schiebetritt einen Sensor zur Messung einer möglichen Ausfahrtiefe und insbesondere eine Steuerung zur Regulierung des Ausfahrens des Schiebetritts umfasst.

12. Schienenfahrzeugwagen nach einem der Ansprüche 10 bis 11, **dadurch gekennzeichnet, dass** der Schiebetritt im Wesentlichen so breit ist, wie die Türe und insbesondere bis zu 600 mm ausfahrbar ist.

13. Schienenfahrzeugwagen nach einem der vorhergehenden Ansprüche, **dadurch gekennzeichnet, dass** der Schienenfahrzeugwagen im Frontbereich zumindest einen ersten Teil einer Kupplung umfasst, wobei das Schienenfahrzeug mindestens einen fixierten Übergangstritt umfasst, welcher bevorzugt über dem zumindest ersten Teil der Kupplung angeordnet ist.

14. Schienenfahrzeugwagen nach Anspruch 13, **dadurch gekennzeichnet, dass** der Übergangstritt eine Trittfläche mit einer Trittflächenlänge, die in Längsausdehnungsrichtung des Wagenkastens ausgebildet ist, und einer Trittflächenbreite, die quer zu Längsausdehnungsrichtung des Wagenkastens ausgebildet ist, umfasst, wobei die Form der Trittfläche so gewählt ist, dass ein Auslenken der Kupplung und/oder ein Ausfahren des Schiebetritts nicht behindert wird, insbesondere ist die Trittflächenlänge und/oder die Trittflächenbreite zumindest einseitig in einem äusseren Trittflächenbereich geringer als im mittleren Bereich der Trittfläche oder auf der anderen Seite der Trittfläche, bevorzugt ist die Form der Trittfläche zum Freihalten von Bewegungsfreihalteflächen, welche für die Bewegung beim Auslenken oder Bewegen des Wagenkasten und/oder anderer Elementen des Schienenfahrzeugwagens freizuhalten sind, abgerundet und/oder abgeschrägt.

15. Schienenfahrzeugwagen nach einem der vorhergehenden Ansprüche, **dadurch gekennzeichnet, dass** der Schienenfahrzeugwagen ein Geländer zur Sicherung des Betretens des Schiebe- und/oder Übergangstritts umfasst.

16. Schienenfahrzeug mit mindestens einem Schienenfahrzeugwagen nach einem der vorhergehenden Ansprüche.

17. Verfahren zur Bildung eines Übergangs zwischen Schienenfahrzeugwagen, umfassend die Schritte:
- Bereitstellen eines ersten und eines zweiten Schienenfahrzeugwagens mit jeweils einem Schiebetritt und jeweils einem Türflügel, insbesondere von zwei Schienenfahrzeugwagen nach einem der Ansprüche 1-30,
- Insbesondere Erteilen eines Befehls zur Bildung eines Übergangs, insbesondere durch Drücken eines ersten Schalters, bevorzugt eines Schalters im ersten Schienenfahrzeugwagen,
- Ausfahren der jeweiligen Schiebetritte des ersten und des zweiten Schienenfahrzeugwagens,
- Öffnen der jeweiligen Türflügel des ersten und des zweiten Schienenfahrzeugwagens,
- Insbesondere Evakuieren der Personen aus dem ersten Schienenfahrzeugwagen über die Schiebetritte in den zweiten Schienenfahrzeugwagen.
